# EUROPEAN PATENT SPECIFICATION

(11) **EP 2 164 749 B1**
(45) Date of publication and mention of the grant of the patent: **03.08.2011**
(21) Application number: 08766748.1
(22) Date of filing: 28.05.2008
(51) Int. Cl.: B62H 3/02, B62H 3/04

(54) **LATCHING SYSTEM FOR A BICYCLE**
VERRIEGELUNGSSYSTEM FÜR EIN FAHRRAD
SYSTEME DE VERROUILLAGE POUR UNE BICYCLETTE

(30) Priority: 01.06.2007 NL 2000678
(43) Date of publication of application: 24.03.2010
(73) Proprietor: Calllock B.V., 5463 HL Veghel (NL)
(72) Inventor: KOOIJMANS, Antonius Gerardus Petrus Johannes, NL-5616 JC Eindhoven (NL)
(74) Representative: Verhees, Godefridus Josephus Maria
(86) International application number: PCT/NL2008/050325
(87) International publication number: WO 2008/153380

(56) References cited:
- DE-A1-102005 042 823
- JP-A- 11 036 682
- JP-A- 2002 352 318
- JP-A- 2004 359 212
- NL-C1- 1 028 581

## Description

### Field of the invention.

The invention relates to a latching system for latching an object, more particularly a frame tube of a bicycle, which latching system comprises a frame provided with an essentially U-shaped recess, as well as a latching element for closing the recess, which latching element is U-shaped in essence, one leg of which forming a latching pawl and the other leg forming a control pawl and a connection member of which between the legs being pivotably connected to the frame, the latching element being pivotable between a release position in which the latching pawl is situated outside the recess and the control pawl extends into the recess, and a latching position in which the latching pawl closes the recess in the frame and the control pawl is situated outside the recess, which latching system further comprises a blocking mechanism provided with a movable blocking pin, and the latching element is provided with a notch which in latching position is provided for the blocking pin, on actuation of the blocking mechanism while the latching element is in the latching position the blocking_pin being inserted into the notch and blocking the latching element against turning.

### State of the art.

A latching system of this type is known from JP 2002 352318 A.

### Summary of the invention.

It is an object of the invention to improve the known latching system. To this end the latching system according to the invention is characterized in that the latching element is further provided with a further notch which in release position is provided for the blocking pin, on actuation of the blocking mechanism while the latching element is in release position the blocking pin being inserted into the further notch and blocking the latching element against turning.

The blocking mechanism preferably comprises a solenoid which is formed by a coil which includes a movable magnetic core which forms the blocking pin.

A further embodiment of the latching system according to the invention is characterized in that the latching system includes a spring which is connected to the frame with one end and is connected to the latching element with the other end, in such a way that the spring forces the latching element to adopt the release position or the latching position.

### Brief description of the drawings.

The invention will be described below in more detail based on an example of embodiment of the latching system according to the invention represented in the drawing figures, in which:
Fig. 1 shows an embodiment of the latching system according to the invention taken apart in components;
Fig. 2 shows a perspective view of the latching system in assembled state;
Fig. 3 shows a plan view of the latching system with the latching element in release position; and
Fig. 4 shows a plan view of the latching system with the latching element in latching position.

### Detailed description of the drawings.

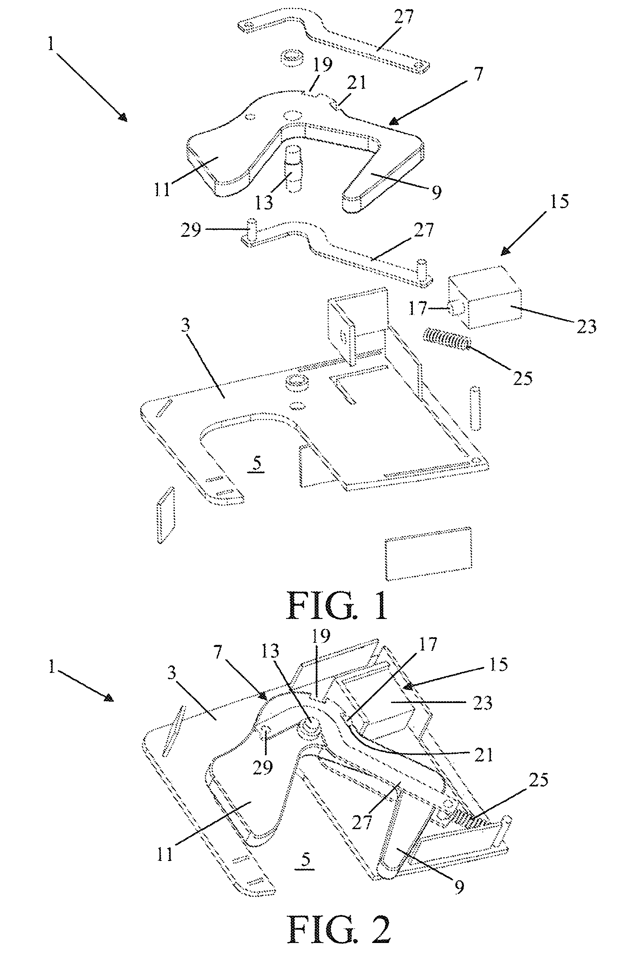

An embodiment of the latching system according to the invention is shown in drawing figures 1-4. The latching system 1 has a frame 3 provided with a recess 5 which is U-shaped in essence, and a latching element 7 for closing the recess. The latching element 7 is U-shaped in essence, one leg of which forming a latching pawl 9 and the other leg forming a control pawl 11, and of which a connection member between the legs is connected to the frame 3 pivotably around capstan 13.

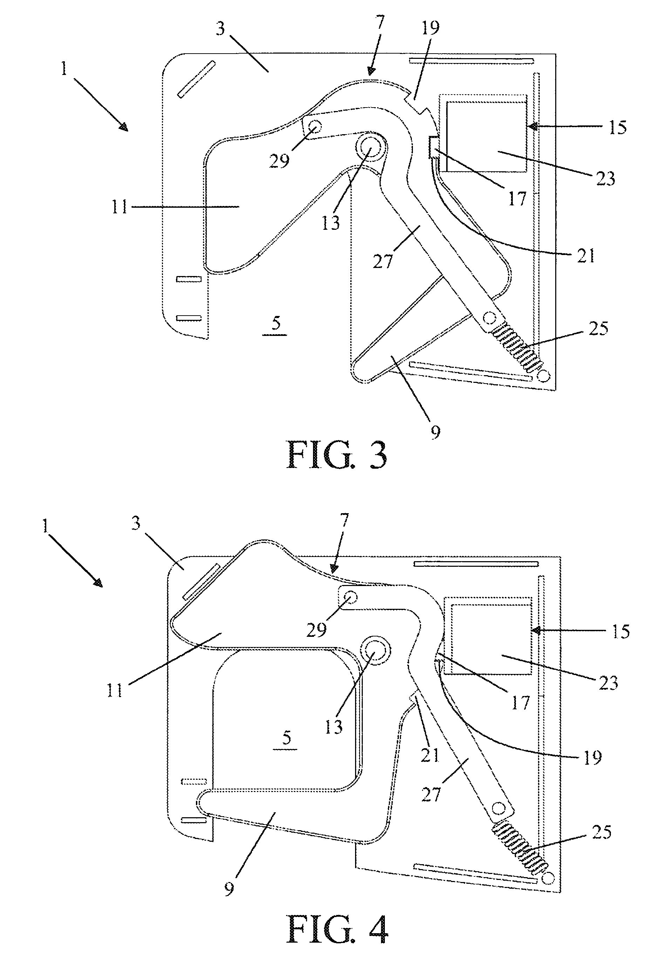

The latching element 7 is pivotable between a release position, see Fig. 3, in which the latching pawl 9 is situated outside the recess 5 and the control pawl 11 extends into the recess 5, and a latching position, see Fig. 4, in which the latching pawl 9 closes the recess 5 in the frame and the control pawl 11 is situated outside the recess 5.

The latching system 1 further has a blocking mechanism 15 which is provided with a movable blocking pin 17. The latching element 7 is provided with notches 19 and 21 with which in latching position (Fig. 4) or release position (Fig. 3) respectively, the blocking pin 17 engages. When the blocking mechanism 15 is actuated, the blocking pin 17 is extended into one of the notches 19, 21 and the latching element 7 is blocked against pivoting around capstan 13. The blocking mechanism 15 has a solenoid which is formed by a coil 23 which accommodates a movable magnetic core which forms the blocking pin 17.

The latching system 1 further includes a spring 25 which is connected with one end to the frame 3 and with the other end to an arm 27 which, pivotably around capstan 29, is connected to the latching element 7. The positions of the capstan 29, the arm 27 and the spring 25 are such that the spring always forces the latching element 7 to adopt one of the extreme positions (release position of Fig. 3 or latching position of Fig. 4).

Albeit the invention has been described in the foregoing based on the drawing figures, it should be observed that the invention is not by any manner or means restricted to the embodiment shown in the drawing figures. The invention also extends to all embodiments deviating from the embodiment shown in the drawing figures within the scope defined by the claims.

## Claims

1. A latching system (1) for latching an object, more particularly a frame tube of a bicycle, which latching system comprises a frame (3) provided with an essentially U-shaped recess (5), as well as a latching element (7) for closing the recess, which latching element is U-shaped in essence, one leg of which forming a latching pawl (9) and the other leg forming a control pawl (11) and a connection member of which between the legs being pivotably connected to the frame, the latching element (7) being pivotable between a release position in which the latching pawl (9) is situated outside the recess (5) and the control pawl (11) extends into the recess, and a latching position in which the latching pawl (9) closes the recess in the frame and the control pawl (11) is situated outside the recess,
which latching system (1) further comprises a blocking mechanism (15) provided with a movable blocking pin (17), and the latching element (7) is provided with a notch (19) which in latching position is provided for the blocking pin (17), on actuation of the blocking mechanism (15) while the latching element (7) is in the latching position the blocking pin (17) being inserted into the notch (19) and blocking the latching element against turning, **characterized in that** the latching element (7) is further provided with a further notch (21) which in release position is provided for the blocking pin (17), on actuation of the blocking mechanism (15) while the latching element (7) is in release position the blocking pin (17) being inserted into the further notch (21) and blocking the latching element against turning.

2. A latching system (1) as claimed in claim 1, **characterized in that** the blocking mechanism (15) comprises a solenoid which is formed by a coil (23) with a movable magnetic core inside it, which forms the blocking pin (17).

3. A latching system (1) as claimed in claim 1 or 2, **characterized in that** the latching system (1) includes a spring (25) which is connected with one end to the frame (3) and with the other end to the latching element (7) in such a way that the spring forces the latching element to adopt the release position or to adopt the latching position.

## Patentansprüche

1. Verriegelungsvorrichtung (1) für die Verriegelung eines Objekts, insbesondere des Rahmenrohrs eines Zweirads, welche einen Rahmen (3) umfasst, der mit einer hauptsächlich U-förmigen Aussparung (5) sowie einem Riegelelement (7) zum Verschließen der Aussparung versehen ist, wobei das Riegelelement hauptsächlich U-förmig ausgebildet ist und einer der Schenkel ein Verriegelungssegment (9) und der andere Schenkel ein Anlenksegment (11) bildet und ein zwischen den Schenkeln vorhandenes Verbindungsstück drehbar mit dem Rahmen verbunden ist, wobei das Riegelelement (7) zwischen einer offenen Stellung, in der das Verriegelungssegment (9) außerhalb der Aussparung (5) angeordnet ist und das Anlenksegment (11) in die Aussparung hineinreicht, und einer geschlossenen Stellung, in der das Verriegelungssegment (9) die in dem Rahmen vorhandene Aussparung verschließt und das Anlenksegment (11) außerhalb der Aussparung angeordnet ist, hin- und herschwenken kann, wobei die Verriegelungsvorrichtung (1) ferner einen Sperrmechanismus (15) umfasst, der mit einem verschiebbaren Sperrstift (17) versehen ist, und in dem Riegelelement (7) eine Aussparung (9) vorhanden ist, die sich in der geschlossenen Stellung vor dem Sperrstift (17) befindet, und wobei im Falle der Betätigung des Sperrmechanismus (15), während sich das Riegelelement (7) in geschlossener Stellung befindet, der Sperrstift (17) in die Aussparung (19) eingeführt wird und verhindert, dass sich das Riegelelement dreht, **dadurch gekennzeichnet, dass** das Riegelelement (7) ferner mit einer weiteren Aussparung (21) versehen ist, die sich in offener Stellung vor dem Sperrstift (17) befindet, wobei im Falle der Betätigung des Sperrmechanismus (15), während sich das Riegelelement (7) in offener Stellung befindet, der Sperrstift (17) in die weitere Aussparung (21) eingeführt wird und verhindert, dass sich das Riegelelement dreht.

2. Verriegelungssystem (1) nach Anspruch 1, **dadurch gekennzeichnet, dass** der Sperrmechanismus (15) einen Solenoid umfasst, der durch eine Spule (23) gebildet wird, in der sich ein verschiebbarer magnetischer Kern befindet, der den Sperrstift (17) bildet.

3. Verriegelungssystem (1) nach einem der Ansprüche 1 oder 2, **dadurch gekennzeichnet, dass** die Verriegelungsvorrichtung (1) eine Feder (25) umfasst, die auf einer Seite mit dem Rahmen (3) und auf der anderen Seite mit dem Riegelelement (7) in der Weise verbunden ist, dass das Riegelelement von der Feder in die offene oder in die geschlossene Stellung gedrückt wird.

## Revendications

1. Dispositif de verrouillage (1) pour verrouiller un objet, en particulier une fourche de cycle, lequel dispositif de verrouillage comprend un cadre (3) pourvu d'une découpe essentiellement en U (5), ainsi qu'un élément de verrouillage (7) pour fermer la découpe, lequel élément de verrouillage est essentiellement en U, dont une patte forme un taquet de verrouillage (9) et l'autre patte un taquet de commande (11), et dont une pièce d'assemblage entre les pattes est assemblée de manière rotative avec le cadre, lequel élément de verrouillage (7) est rotatif entre une position déverrouillée, où le taquet de verrouillage (9) est présent à l'extérieur de la découpe (5) et le taquet de commande (11) s'étend dans la découpe, et une position verrouillée, où le taquet de verrouillage (9) ferme la découpe dans le cadre et le taquet de commande(11) est présent à l'extérieur de la découpe, lequel dispositif de verrouillage (1) comprend également un mécanisme de blocage (15) pourvu d'un cliquet mobile (17), et dans l'élément de verrouillage (7) une découpe (9) présente en position verrouillée pour le cliquet (17), où en cas d'actionnement du mécanisme de blocage (15), alors que l'élément de verrouillage (7) est en position verrouillée, le cliquet (17) est inséré dans la découpe (19) et l'élément de verrouillage empêche toute distorsion, **caractérisé en ce que** l'élément de verrouillage (7) est également pourvu d'une découpe supplémentaire (21) qui est présente en position déverrouillée pour le cliquet (17), où en cas d'actionnement du mécanisme de blocage (15), alors que l'élément de verrouillage (7) est présent en position déverrouillée, le cliquet (17) est inséré dans la découpe supplémentaire (21) et l'élément de verrouillage empêche toute distorsion.

2. Système de verrouillage (1) selon la revendication 1, **caractérisé en ce que** le mécanisme de blocage (15) comprend un solénoïde formé d'une bobine (23) contenant un noyau magnétique mobile, qui forme le cliquet (17).

3. Système de verrouillage (1) selon la revendication 1 ou 2, **caractérisé en ce que** le dispositif de verrouillage (1) comprend un ressort (25) dont une extrémité est reliée au cadre (3) et l'autre extrémité à l'élément de verrouillage (7), de sorte que le ressort pousse l'élément de verrouillage vers la position déverrouillée ou la position verrouillée.
